# EUROPEAN PATENT SPECIFICATION

(11) **EP 3 034 916 B1**
(45) Date of publication and mention of the grant of the patent: **13.11.2019**
(21) Application number: 15003602.8
(22) Date of filing: 17.12.2015
(51) Int. Cl.: F16K 15/04, F04B 33/00, F04B 39/10

(54) **CHECK VALVE FOR A FLUID AND INFLATION DEVICE**
RÜCKSCHLAGVENTIL FÜR EIN FLUID UND AUFPUMPVORRICHTUNG
SOUPAPE ANTI-RETOUR POUR UN FLUIDE ET DISPOSITIF DE GONFLAGE

(30) Priority: 17.12.2014 IT MI20142172
(43) Date of publication of application: 22.06.2016
(73) Proprietor: R.S. e V. di Castoldi Sergio, 20865 Usmate-Velate (MB) (IT)
(72) Inventor: Castoldi, Sergio, 20865 Usmate-Velate (MB) (IT)

(56) References cited:
- EP-A1- 1 947 342
- BE-A- 421 841
- US-A- 1 542 521
- US-A- 1 679 283
- US-A- 5 178 184
- US-A1- 2007 215 217
- US-B1- 6 685 451

## Description

The present invention relates to an inflation device with a check valve and to a corresponding compression device for a gaseous fluid, such as in particular air or other gas usable in particular for inflating of a tire, in particular of a bicycle.

In particular the present invention relates to an inflation device for wheels of mechanical devices such as carts and/or wheelbarrows and/or similar and/or for tires of vehicles, preferably motor vehicles among which in particular for bicycles, motor cars, trailers and/or similar.

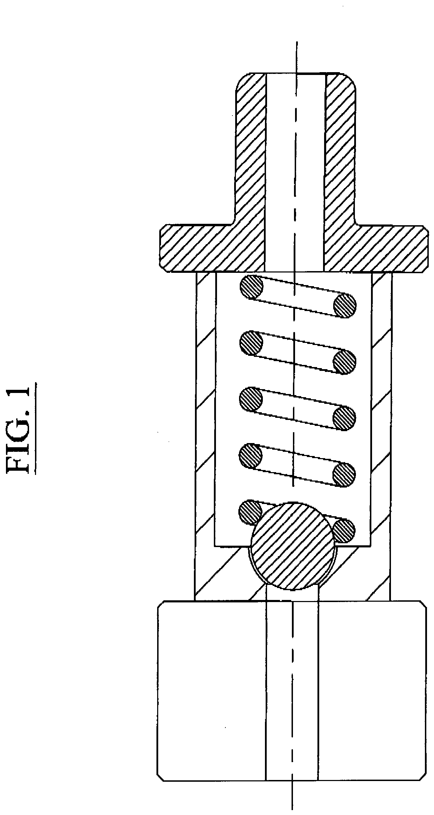

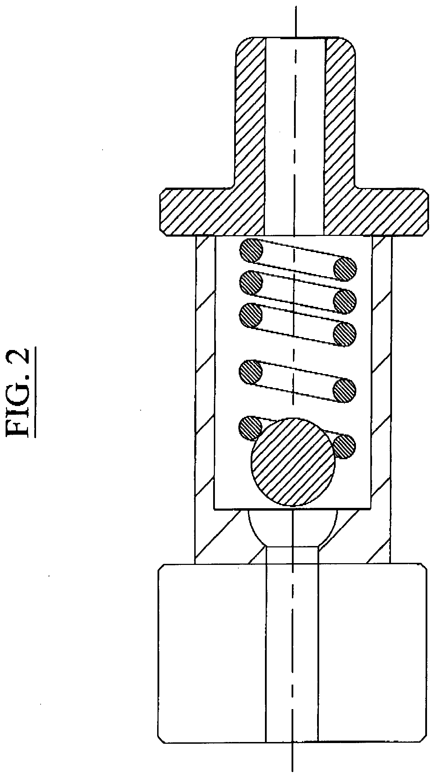

As shown in Figures 1 and 2, a check valve of the known art comprises a chamber in which a ball can slide which as shown in Figure 1 is pressed onto a seat by a metal spring which maintains a normally closed inlet duct of a gaseous fluid such as air.

BE421841 describes an inflation device according to the preamble of claim 1 and EP1947342 describes a compression device according to the preamble of claim 14.

Purpose of the present invention is to provide an inflation device having an improved efficiency.

Another purpose is to provide an inflation device having a high reliability.

Still another purpose is to have an inflation device with a check valve for fluids which does not contaminate said fluid during its passage through the same.

Still another purpose is to have an inflation device with a check valve for fluids permitting to replace existing check valves.

A further purpose is to have an inflation device which is simple to realize and that is economically advantageous.

These purposes according to the present invention are obtained by providing an inflation device as defined in claim 1 and a compression device as defined in claim 14.

Further features of the invention are highlighted by the following claims.

The features and advantages of an inflation device according to the present invention will become more evident from the following description, which is exemplary and non-limiting, making reference to the attached schematic drawings:
Figure 1 is a partially left side elevation sectional view of a check valve according to known art in a normally closed rest condition;
Figure 2 is a view of Figure 1 in which the check valve according to the known art is in a working condition and in which the spring is compressed;

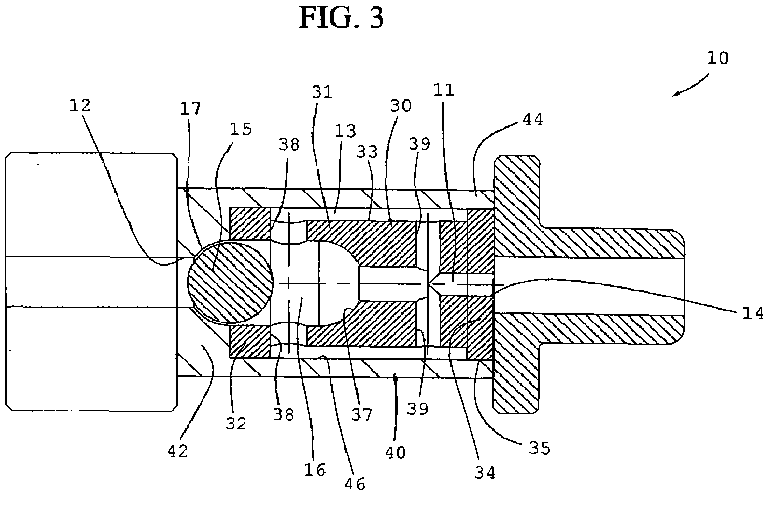

Figure 3 is a partially left side elevation sectional view of a preferred embodiment of a check valve for the inflation device according to the present invention;

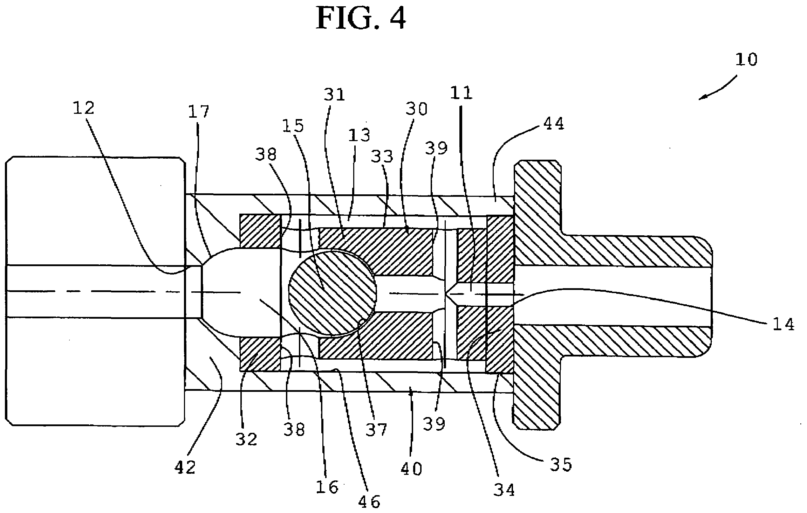

Figure 4 is a left side elevation view of Figure 3 in a working condition;

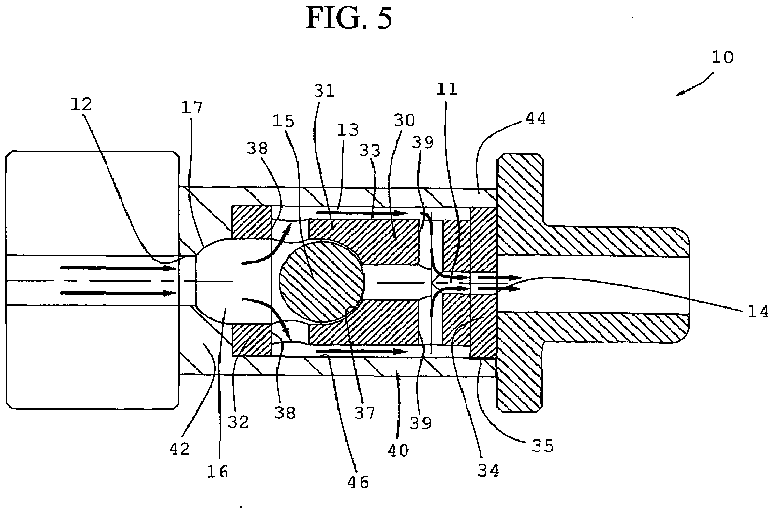

Figure 5 is a left side elevation view of Figure 4 in which the flow of the fluid is shown;

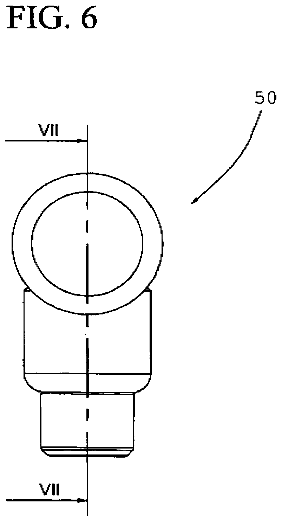

Figure 6 is a front elevation view of a preferred embodiment of an inflation device according to the present invention;

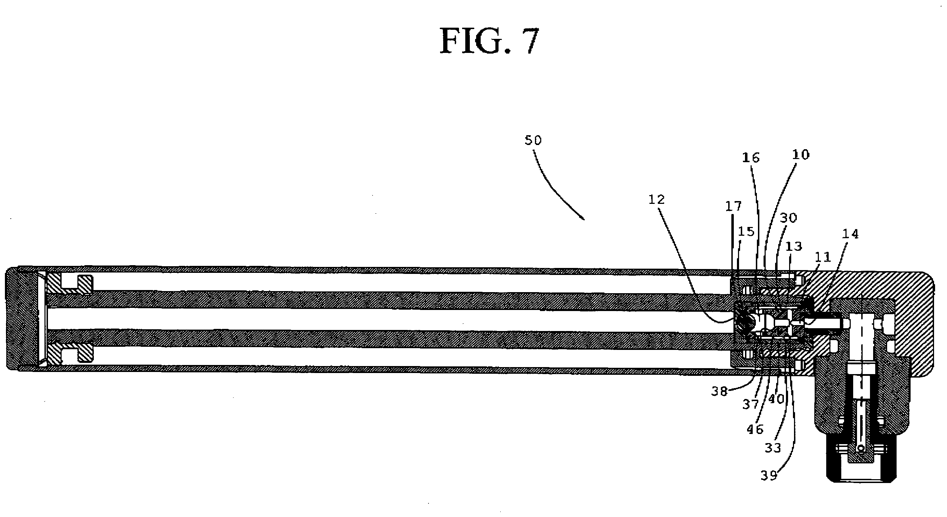

Figure 7 is a left side elevation view of Figure 6 sectioned along line VII-VII.

With reference to the Figures, it is shown a check or non-return valve 10 for a gaseous fluid such as in particular air.

Preferably said valve 10 is a valve 10 for a compression device of said gaseous fluid.

Said valve 10 comprises a first proximal opening 12 and a second distal opening 14, and also comprises a duct 11 connecting said first proximal opening 12 with said second distal opening 14 for allowing the passage of said gaseous fluid, such as in particular air to be compressed or a medical gas.

Furthermore, said valve 10 comprises a seat 17 made at said first proximal opening 12 and also includes a closure element 15, in particular in the shape of a sphere, which is coupled with said seat 17 for prevent the leakage of said fluid from said first proximal opening 12.

Preferably said valve 10 comprises an outer body 40 which comprises said first proximal opening 12 formed at a first proximal end 42, and said outer body 40 also comprises a cavity 46, in particular cylindrical, which is equipped with a bottom wall in which at said first proximal opening 12 said seat 17 for said closure element 15 is preferably made.

According to the present invention, said valve 10 comprises at least a second annular duct 13 which is associated to said first proximal opening 12 and to said second distal opening 14, for allowing the passage of said fluid coming from said first proximal opening 12 to said second distal opening 14, even when said duct 11 is closed.

In particular said at least second duct 13 connects said first proximal opening 12 to said second distal opening 14, for allow the passage of said fluid from said first proximal opening 12 to said second distal opening 14 even when said duct 11 is closed.

In fact said at least second duct t3 from the hydraulic point of view is parallel to said first duct 11, thus allowing at least one further passage of said fluid in case of closing of said duct 11.

In other words, said at least second duct 13 has the function of a "bypass" duct, in fact when said duct 11 is closed by said closure element 15, said at least second duct 13 allows the passage of said fluid, in particular gaseous, from said first proximal opening 12 and said second distal opening 14 passing beyond said duct 11.

Advantageously this allows to avoid the need of an elastic element for retaining the closure element, such as for example a spring, in particular metallic, which as shown in Figures 1 and 2 in the known art allows to apply a pressure on a ball closure element, for keep normally closed the first proximal opening 12.

Advantageously, this results in a reduction of costs and the number of components, also simplifying the assembly cost of the components.

This also determines an increase of the useful life of the valve and a considerable increase of reliability, as the spring during the time is subject to ageing and it is also subject to corrosion phenomena.

Further the elimination of the spring, in particular of metallic type, allows to create completely sterile check valves, usable in specific fields in which sterility is required such as for example in the medical/surgical field, and/or in the food industry, or in chemical, pharmaceutical or cosmetic field.

As a matter of fact, in some cases also stainless steel springs can be subject to corrosion phenomena with consequent contamination of the fluid, in particular of gaseous type.

Other advantages are the following:
- maximum sterility,
- high tightness,
- energy saving (minimum pressure losses),
- low opening pressure,
- laminar flow,
- maintenance-free,
- higher durability and reliability of the valve.

Advantageously, the laminar flow inside the valve 10 also allows to avoid turbulence and thus also permits a use in the case of dosage or in case it is necessary to determine the amount of fluid, in particular gaseous, passing through said valve 10 in a given time interval.

Furthermore, the operation of the valve 10 for the inflation device according to the present invention is completely different compared to the valves of the known art.

In particular when it is used in inflating devices usable for example for devices for product handling or for vehicles in particular with at least two wheels, all this determines many advantages in terms of performance.

In particular, said at least second duct 13 at least partially surrounds said duct 11 and it is preferably an annular duct 13.

Advantageously this allows to have a sufficient section without increasing too much the overall dimensions of the valve 10.

Preferably said valve 10 comprises a chamber 16 which is connected to said first proximal opening 12 and to said second distal opening 14 and within which is movable said closure element 15, preferably of the ball type, and in particular said chamber 16 is also connected to said duct 11 and is also associated to said at least second duct 13.

So in particular said chamber 16 is directly connected to said duct 11 and also indirectly to said at least second duct 13.

Furthermore, in particular, said closure element 15 is able to shift from a working position in which the same is pressed against one end of said duct 11, and in particular also against a second seat 37, for closing only said duct 11 and for allowing the passage of a flow of said fluid coming from said first proximal opening 12 to said second distal opening 14 through said at least second duct 13, to a rest position in which said closure element 15 is pressed against said seat 17 for close said first proximal opening 12 so preventing the passage through the same of a flow of said fluid coming from said duct 11 and from said at least second duct 13.

In particular in said working position said closure element 15 is coupled and pressed by a first pressure exerted against one end of said duct 11 which is farther than said second distal opening 14, and in particular also against said seat 37, said first input pressure being exerted by said fluid at said first proximal opening 12, in particular when said second distal opening 14 is connected to a closed chamber, and in which said first pressure is higher than a second pressure of the fluid at said second distal opening 14.

In particular, in said rest position said closure element 15 is coupled and pressed by a second pressure against said seat 17, said second pressure also exerting a pressure within said duct 11 and also within said at least second duct 13, in particular when said second distal opening 14 is connected to said closed chamber, and in the absence of said first pressure or when said second pressure is higher than said first pressure.

Advantageously this allows to avoid the need for a spring and also the necessary pressure needs are reduced to a minimum for be able to shift from said rest position to said working position and above all, necessary pressure increments are reduced to a minimum for maintain said closure element 15 in said working position.

In fact that in the valves of the known art an elastic retainer element such as a spring is present, for maintain said closure element 15 in the working position it is necessary to overcome the compression force of the spring which in the working position has a maximum compression since it have a force which proportionally increases with the reduction in length of the spring itself, which has a minimum length in the working position.

Preferably said valve 10 comprises a second seat 37 formed at one end of said duct 11 which is in particular farther with respect to said second distal opening 14, said closure element 15 being couplable with said second seat 37 for close said conduit 11 when a pressure of said fluid at said first proximal opening 12 is greater than a pressure of said fluid at said second distal opening 14.

Preferably, said chamber 16 has a length which is shorter than a length of said cavity 46 of said outer body 40, and in particular said chamber 16 has a diameter or a side smaller than the diameter or a side of said cavity 46 of said outer body 40, so advantageously allowing a relevant reduction of the distance necessary for shifting said closure element 15 from said working position to said working position.

Consequently, this also allows a reduction of closing time of said seat 17, when an input pressure of said fluid exerted on said first proximal opening 12 is interrupted.

Furthermore this also reduces the pressure losses as the volume of said chamber 16 is also very reduced with respect to said cavity 46 of said outer body 40 advantageously also permitting an notably increase of the maximum pressure reachable with said valve 10.

In particular, said valve 10 is a ball type valve 10.

Preferably said valve 10 comprises an inner body 30 in which said duct 11 and said second distal opening 14 are made, and in which said at least one second duct 13 is partially made.

Advantageously this allows to replace the spring with said inner body 30, so obtaining the advantages of the present invention and avoiding a component which during the time can generate noise and malfunction.

Advantageously, this makes it possible to modify existing spring check valves for improve performance, and prevent malfunction and noise often due to the spring, so advantageously reducing the number of components and considerably increasing the reliability and useful life, also avoiding unwanted noise during operation.

In particular said internal body 30 comprises a first proximal end 32 and a second distal end 34.

Preferably said chamber 16 is also realized within said inner body 30 and in particular a is longitudinal groove, preferably axially symmetric, which is made starting from said first proximal end 32 of said inner body 30, and also said chamber 16 communicates with said duct 11.

Advantageously this allows to easily realize said valve and also it advantageously allows to update and modify also existing valves in a very simple way, by eliminating the spring and inserting inside said valve said inner body 30 and said closure element 15, by determining a whole series of advantages as previously described and also permitting to reach higher pressure in the case of gaseous fluid.

Preferably, said chamber 16 comprises a bottom wall at which said second seat 37 is made, in proximity of one end of said duct 11.

Advantageously this allows to realize said valve in just one piece and to allow the updating of existing valves by eliminating existing spring and inserting said inner body 30 and said closure element 15.

In particular, said seat 17 for said closure element 15 is made within said inner body 30, in particular within said chamber 16 in proximity of said duct 11.

Preferably said at least second duct 13 is defined by a portion of said cavity 46 of said outer body 40 and of an outer side portion 33 of said inner body 30 which, having side dimensions smaller than said portion of said cavity 46 of said outer body 40, makes together with the same an annular gap between said inner body 30 and said outer body 40 defining said at least second duct 13.

Advantageously in this way it is very easy to realize said at least second duct 13.

In particular, said outer side portion 33 has a lateral dimension smaller than said first proximal end 32 and/or with respect to said second distal end 34, also preferably said second distal end of said inner body 30 comprises fixing means 35 formed on a outer portion of the same which are couplable with corresponding fixing means internally made in said cavity 46 of said outer body 40 at a second distal end 44 of the same, for realize said check valve 10.

Advantageously this allows to easily realize a coupling between said inner body 30 and outer body 40, advantageously without pressure losses.

In particular said at least second duct 13 comprises at least one hole 38 preferably radial, which connects said at least second duct 13 to said chamber 16.

Preferably said at least one hole 38 has a diameter which is smaller than the radius of said closure element 15, in particular of the ball type.

Preferably said at least one hole 38 are at least two holes 38 each of them having in particular a diameter smaller than a radius of said closure element 15.

Preferably said at least second duct 13 comprises a least one hole 39 preferably radial, preferably at least two radial holes 39, which connect said at least second duct 13 with said duct 11 and said second distal opening 14.

Advantageously this allows to achieve in a very simple way said inner body 30, also simplifying the mass production and minimizing the cost of the mold.

Preferably said valve 10 is completely formed with polymeric materials in particular sterilizable, and in particular said valve 10 is for a pure gas preferably for a medical gas.

In particular, advantageously it is possible to change easily the maximum pressure obtainable with said valve 10, simply modifying the diameter of said at least one radial hole 38 and of said at least one radial hole 39, and preferably also realizing a diameter of said second distal opening 14 lesser to a diameter of said first proximal opening 12 and in particular inferior to 1/2 of the same, and advantageously permitting to realize said valve 10 for gaseous fluid with the same external dimensions and with different maximum pressures reachable.

Also advantageously this solution shown in the figures from 3 to 7 permit to miniaturize said valve 10 in a simple manner, preferably with an external diameter inferior to 7 mm, and permit at the same time allows to reach higher pressures in a shorter time and with less force and with minimum pressure losses.

In particular, said valve 10 is a valve for a compression device of a gaseous fluid, such as in particular a medical gas or air.

In particular, said valve 10 is a valve 10 for an inflating device 50 for inflating a tire of a handling device and/or of a vehicle having at least two wheels, preferably a motor vehicle and in particular a bicycle, or a trailer with at least two wheels, or a motor vehicle having at least two or at least three wheels, or a motor vehicle with at least 4 wheels.

According to another aspect of the present invention, it is provided an inflation device 50 for a tire for a handling device and/or for a vehicle having at least two wheels, preferably a motor vehicle and preferably selected among a bicycle, a trailer with at least two wheels, a motor vehicle with two or three wheels, a motor vehicle having at least four wheels, in which said inflation device 50 comprises at least one check valve 10 having one or more features previously described and/or according to any one of the preferred embodiments previously described, and said inflation device 50 also comprises compression means for compressing a gaseous fluid within said tire.

Advantageously in this way a very efficient and performing inflation device is obtained, also with a reduced maintenance, and also said inflation device allows to reach higher pressures in a shorter time and with less force.

According to another aspect of the present invention it is provided a compression device for a gaseous type such as in particular air which comprises at least one check valve 10 having one or more features previously described in any one of the preferred embodiments previously described, and also said compression device comprises a storage tank for a pressurized fluid and compression means for compressing said fluid within said storage tank.

Advantageously this allows to reduce the energy consumption for compressing said fluid due to the fact that said valve allows for a compression with higher efficiency, not necessarily needing to overcome also the retaining force of the spring which has been eliminated, and this also allows to obtain compression devices which with the same power are able to achieve higher pressures.

In particular, said compression device comprises a suction duct for said fluid, in particular of a gaseous type, which is connected to said compression means, and also includes a second duct and a third inlet duct and a fourth outlet duct, also said compression means are connected to said first proximal opening 12 of said valve 10 by means of said second duct, and said second distal opening 14 of said valve 10 is also connected to said storage tank through said third inlet duct, and said storage tank is also connected to said fourth outlet duct for said pressurized fluid.

So it has been seen that an inflation device and a compression device according to the present invention, achieve the previously highlighted purposes.

The inflation device and the compression device of the present invention so conceived are the susceptible of numerous changes and variants, all within the same inventive concept.

Furthermore, in practice the used materials, as well as their dimensions and components, can be of any kind according to the technical needs.

## Claims

1. An inflation device (50) for a tire for a vehicle having at least two wheels and/or for a handling device, wherein said inflation device (50) comprises a check valve (10) and further comprises compression means for compressing a gaseous fluid within said tire, said check valve (10) comprising a first proximal opening (12) and a second distal opening (14), and also including a duct (11) connecting said first proximal opening (12) with said second distal opening (14) for allowing the passage of said gaseous fluid, and also said valve (10) comprises a seat (17) formed within said first proximal opening (12) and also includes a closure element (15) which is couplable with said seat (17) for preventing the leakage of said gaseous fluid from said first proximal opening (12), said inflation device (50) **characterized in that** said check valve (10) comprises at least one second annular duct (13) which at least partially surrounds said duct (11) and which is associated with said first proximal opening (12) and with said second distal opening (14), for allowing the passage of said gaseous fluid from said first proximal opening (12) to said second distal opening (14), even when said duct (11) is closed.

2. The inflation device (50) according to claim 1, **characterized in that** said at least one second annular duct (13) from the hydraulic point of view is parallel to said duct (11).

3. The inflation device (50) according to any of claims 1 to 2, **characterized in that** it comprises an outer body (40) comprising said first proximal opening (12) formed at a first proximal end (42) and also said outer body (40) comprises a cavity (46), in particular of a cylindrical type, which is equipped with a bottom wall in which at said first proximal opening (12) said seat (17) for said closure element (15) is preferably made.

4. The inflation device (50) according to any of claims 1 to 3, **characterized in that** it comprises a chamber (16) connected with said first proximal opening (12) and with said second distal opening (14) and within which is movable said closure element (15) preferably of the ball type, and also said chamber (16) is connected with said duct (11) and is also associated with said at least one second annular duct (13).

5. The inflation device (50) according to any of claims 1 to 4, **characterized in that** said closure element (15) is able to shift from a working position in which the same is pressed against one end of said duct (11), and in particular also against a second seat (37), for closing only said duct (11) and for permitting the passage of a flow of said gaseous fluid coming from said first proximal opening (12) to said second distal opening (14) through said at least one second annular duct (13), to a rest position in which said closure element (15) is pressed against said seat (17) for close said first proximal opening (12) so preventing the passage there through of a flow of said gaseous fluid coming from said duct (11) and from said at least second annular duct (13).

6. The inflation device (50) according to any of claims 1 to 5, **characterized in that** it comprises a second seat (37) formed at one end of said duct (11) which in particular is farther than said second distal opening (14), said closure element (15) being couplable with said second seat (37) for close said duct (11) when a pressure of said gaseous fluid at said first proximal opening (12) is higher than a pressure of said gaseous fluid at said second distal opening (14).

7. The inflation device (50) according to any of claims 4 to 6, **characterized in that** said chamber (16) has a length lesser than a length of said cavity (46) of said outer body (40), and in particular said chamber (16) has a diameter or a side lesser than the diameter or a one side of said cavity (46) of said outer body (40), advantageously allowing a relevant reduction of the distance necessary for shifting said closure element (15) from said working position to said working position.

8. The inflation device (50) according to any of claims 1 to 7, **characterized in that** it comprises an inner body (30) comprising a first proximal end (32) and a second distal end (34), and also within said inner body (30) said duct (11) and said second distal opening (14) are made, and in which said at least one second annular duct (13) is partially formed.

9. The inflation device (50) according to claim 8, **characterized in that** said chamber (16) is formed within said internal body (30) and is in particular is a longitudinal groove preferably axially symmetric, which is made starting from a first proximal end (32) of said inner body (30), and also said chamber (16) communicates with said duct (11).

10. The inflation device (50) according to claim 9, **characterized in that** said chamber (16) comprises a bottom wall at which said second seat (37) is formed in proximity of said end of said duct (11).

11. The inflation device (50) according to any of claims 8 to 10, **characterized in that** said at least one second annular duct (13) is defined by a portion of said cavity (46) of said outer body (40) and by an outer side portion (33) of said inner body (30), which has a lateral dimension lesser than said portion of said cavity (46) of said outer body (40), together with the same makes an annular gap between said inner body (30) and said outer body (40), defining said second annular duct (13).

12. The inflation device (50) according to any of claims 8 to 11, **characterized in that** said outer side portion (33) has a lateral dimension lesser than said first proximal end (32) and/or than said second distal end (34), and further preferably said second distal end of said inner body (30) comprises fixing means (35) formed on an outer portion of the same which are couplable with corresponding fixing means formed inside said cavity (46) of said outer body (40) at a second distal end (44) of the same, for realize said check valve (10).

13. The inflation device (50) according to claim 1, **characterized in that** it is adapted for a vehicle having at least two wheels which is preferably selected from a bicycle, a trailer with at least two wheels, a motor vehicle with two or three wheels, a motor vehicle having at least four wheels.

14. A compression device for a gaseous fluid, such as in particular air, which comprises a storage tank for a pressurized gaseous fluid and compression means for compressing said gaseous fluid within said storage tank, the compression device comprising a check valve (10) which comprises a first proximal opening (12) and a second distal opening (14), and also including a duct (11) connecting said first proximal opening (12) with said second distal opening (14) for allowing the passage of said gaseous fluid, and also said valve (10) comprises a seat (17) formed within said first proximal opening (12) and also includes a closure element (15) which is couplable with said seat (17) for preventing the leakage of said gaseous fluid from said first proximal opening (12), said compression device **characterized in that** the check valve (10) comprises at least one second annular duct (13) which at least partially surrounds said duct (11) and which is associated with said first proximal opening (12) and with said second distal opening (14), for allowing the passage of said gaseous fluid from said first proximal opening (12) to said second distal opening (14), even when said duct (11) is closed.

15. The compression device according to claim 14, **characterized in that** it comprises a suction duct for said gaseous fluid, which is connected to said compression means, and further comprises a second duct and a third inlet duct, and a fourth outlet duct, and in which said compression means are connected to said first proximal opening (12) of said valve (10) through said second duct, and also said second distal opening (14) of said valve (10) is connected to said storage tank through said third inlet duct, and also said storage tank is connected to said fourth outlet duct for said pressurized gaseous fluid.

## Patentansprüche

1. Eine Aufblasvorrichtung (50) für einen Reifen für ein Fahrzeug mit mindestens zwei Rädern und/oder für eine Handhabungsvorrichtung, wobei die Aufblasvorrichtung (50) ein Rückschlagventil (10) umfasst und ferner Kompressionsmittel zum Komprimieren eines gasförmigen Fluids innerhalb des Reifens umfasst, wobei das Rückschlagventil (10) eine erste proximale Öffnung (12) und eine zweite distale Öffnung (14) umfasst, und auch einen Kanal (11) umfasst, der die erste proximale Öffnung (12) mit der zweiten distalen Öffnung (14) verbindet, um den Durchgang des gasförmigen Fluids zu ermöglichen, und auch das Ventil (10) umfasst einen Sitz (17), der innerhalb der ersten proximalen Öffnung (12) ausgebildet ist, und beinhaltet auch ein Verschlusselement (15), das mit dem Sitz (17) koppelbar ist, um das Austreten des gasförmigen Fluids aus der ersten proximalen Öffnung (12) zu verhindern, die Aufblasvorrichtung (50) **dadurch gekennzeichnet, dass** das Rückschlagventil (10) mindestens einen zweiten ringförmigen Kanal (13) umfasst, der den Kanal (11) zumindest teilweise umgibt und der der ersten proximalen Öffnung (12) und der zweiten distalen Öffnung (14) zugeordnet ist, um den Durchgang des gasförmigen Fluids von der ersten proximalen Öffnung (12) zur zweiten distalen Öffnung (14) zu ermöglichen, selbst wenn der Kanal (11) geschlossen ist.

2. Aufblasvorrichtung (50) nach Anspruch 1, **dadurch gekennzeichnet, dass** der mindestens eine zweite ringförmige Kanal (13) aus hydraulischer Sicht parallel zu dem Kanal (11) verläuft.

3. Aufblasvorrichtung (50) nach einem der Ansprüche 1 bis 2, **dadurch gekennzeichnet, dass** sie einen Außenkörper (40) umfasst, der die erste proximale Öffnung (12) umfasst, die an einem ersten proximalen Ende (42) ausgebildet ist, und auch der Außenkörper (40) einen Hohlraum (46), insbesondere eines zylindrischen Typs, umfasst, der mit einer Bodenwand ausgestattet ist, in der an der ersten proximalen Öffnung (12) der Sitz (17) für das Verschlusselement (15) vorzugsweise hergestellt ist.

4. Aufblasvorrichtung (50) nach einem der Ansprüche 1 bis 3, **dadurch gekennzeichnet, dass** sie eine Kammer (16) umfasst, die mit der ersten proximalen Öffnung (12) und mit der zweiten distalen Öffnung (14) verbunden ist und in der das Verschlusselement (15) vorzugsweise kugelartig beweglich ist, und auch die Kammer (16) mit dem Kanal (11) verbunden ist und auch mit dem mindestens einen zweiten ringförmigen Kanal (13) verbunden ist.

5. Aufblasvorrichtung (50) nach einem der Ansprüche 1 bis 4, **dadurch gekennzeichnet, dass** das Verschlusselement (15) aus einer Arbeitsposition, in der es gegen ein Ende des Kanals (11), insbesondere auch gegen einen zweiten Sitz (37) gedrückt wird, verschiebbar ist, um nur den Kanal (11) zu schließen und den Durchfluss eines Stroms des gasförmigen Fluids, der von der ersten proximalen Öffnung (12) zur zweiten distalen Öffnung (14) kommt, durch den mindestens einen zweiten ringförmigen Kanal (13) zu ermöglichen, in eine Ruheposition, in der das Verschlusselement (15) gegen den Sitz (17) gedrückt wird, um die erste proximale Öffnung (12) zu schließen und so den Durchgang eines Stroms des gasförmigen Fluids aus dem Kanal (11) und aus dem mindestens zweiten ringförmigen Kanal (13) zu verhindern.

6. Aufblasvorrichtung (50) nach einem der Ansprüche 1 bis 5, **dadurch gekennzeichnet, dass** sie einen zweiten Sitz (37) umfasst, der an einem Ende des Kanals (11) ausgebildet ist, der insbesondere weiter als die zweite distale Öffnung (14) entfernt ist, wobei das Verschlusselement (15) mit dem zweiten Sitz (37) zum Schließen des Kanals (11) koppelbar ist, wenn ein Druck des gasförmigen Fluids an der ersten proximalen Öffnung (12) höher ist als ein Druck des gasförmigen Fluids an der zweiten distalen Öffnung (14).

7. Aufblasvorrichtung (50) nach einem der Ansprüche 4 bis 6, **dadurch gekennzeichnet, dass** die Kammer (16) eine Länge aufweist, die kleiner ist als eine Länge des Hohlraums (46) des Außenkörpers (40), und insbesondere die Kammer (16) einen Durchmesser oder eine Seite aufweist, die kleiner ist als der Durchmesser oder eine Seite des Hohlraums (46) des Außenkörpers (40), was eine wesentliche Reduzierung des Abstands ermöglicht, der erforderlich ist, um das Verschlusselement (15) von der Arbeitsposition in die Arbeitsposition zu verschieben.

8. Aufblasvorrichtung (50) nach einem der Ansprüche 1 bis 7, **dadurch gekennzeichnet, dass** sie einen inneren Körper (30) umfasst, der ein erstes proximales Ende (32) und ein zweites distales Ende (34) umfasst, und dass auch innerhalb des inneren Körpers (30) der Kanal (11) und die zweite distale Öffnung (14) hergestellt sind, und in dem der mindestens eine zweite ringförmige Kanal (13) teilweise ausgebildet ist.

9. Aufblasvorrichtung (50) nach Anspruch 8, **dadurch gekennzeichnet, dass** die Kammer (16) innerhalb des Innenkörpers (30) ausgebildet ist und insbesondere eine vorzugsweise axialsymmetrische Längsnut ist, die ausgehend von einem ersten proximalen Ende (32) des Innenkörpers (30) ausgebildet ist, und auch die Kammer (16) mit dem Kanal (11) in Verbindung steht.

10. Aufblasvorrichtung (50) nach Anspruch 9, **dadurch gekennzeichnet, dass** die Kammer (16) eine Bodenwand umfasst, an der der zweite Sitz (37) in der Nähe des Endes des Kanals (11) ausgebildet ist.

11. Aufblasvorrichtung (50) nach einem der Ansprüche 8 bis 10, **dadurch gekennzeichnet, dass** der mindestens eine zweite Ringkanal (13) durch einen Abschnitt des Hohlraums (46) des Außenkörpers (40) und durch einen äußeren Seitenabschnitt (33) des Innenkörpers (30) definiert ist, der eine geringere Querabmessung als der Abschnitt des Hohlraums (46) des Außenkörpers (40) aufweist, zusammen mit demselben einen Ringspalt zwischen dem Innenkörper (30) und dem Außenkörper (40) bildet, der den zweiten Ringkanal (13) definiert.

12. Aufblasvorrichtung (50) nach einem der Ansprüche 8 bis 11, **dadurch gekennzeichnet, dass** der äußere Seitenabschnitt (33) eine geringere Querabmessung aufweist als das erste proximale Ende (32) und/oder das zweite distale Ende (34), und ferner vorzugsweise das zweite distale Ende des inneren Körpers (30) Befestigungsmittel (35) aufweist, die an einem äußeren Abschnitt desselben ausgebildet sind und mit entsprechenden Befestigungsmitteln kuppelbar sind, die innerhalb des Hohlraums (46) des äußeren Körpers (40) an einem zweiten distalen Ende (44) desselben ausgebildet sind, um das Rückschlagventil (10) zu realisieren.

13. Aufblasvorrichtung (50) nach Anspruch 1, **dadurch gekennzeichnet, dass** sie für ein Fahrzeug mit mindestens zwei Rädern, das vorzugsweise aus einem Fahrrad, einem Anhänger mit mindestens zwei Rädern, einem Kraftfahrzeug mit zwei oder drei Rädern, einem Kraftfahrzeug mit mindestens vier Rädern ausgewählt ist, angepasst ist.

14. Kompressionsvorrichtung für ein gasförmiges Fluid, wie insbesondere Luft, die einen Speichertank für ein druckbeaufschlagtes gasförmiges Fluid und Kompressionsmittel zum Verdichten des gasförmigen Fluids innerhalb des Speichertanks umfasst, wobei die Kompressionsvorrichtung ein Rückschlagventil (10) umfasst, das eine erste proximale Öffnung (12) und eine zweite distale Öffnung (14) umfasst, und auch einen Kanal (11) umfasst, der die erste proximale Öffnung (12) mit der zweiten distalen Öffnung (14) verbindet, um den Durchgang des gasförmigen Fluids zu ermöglichen, und auch das Ventil (10) umfasst einen Sitz (17), der innerhalb der ersten proximalen Öffnung (12) ausgebildet ist, und beinhaltet auch ein Verschlusselement (15), das mit dem Sitz (17) koppelbar ist, um das Austreten des gasförmigen Fluids aus der ersten proximalen Öffnung (12) zu verhindern, die Kompressionsvorrichtung (50), **dadurch gekennzeichnet, dass** das Rückschlagventil (10) mindestens einen zweiten ringförmigen Kanal (13) umfasst, der den Kanal (11) zumindest teilweise umgibt und der der ersten proximalen Öffnung (12) und der zweiten distalen Öffnung (14) zugeordnet ist, um den Durchgang des gasförmigen Fluids von der ersten proximalen Öffnung (12) zur zweiten distalen Öffnung (14) zu ermöglichen, selbst wenn der Kanal (11) geschlossen ist.

15. Die Kompressionsvorrichtung nach Anspruch 14, **dadurch gekennzeichnet, dass** sie einen Ansaugkanal für das gasförmige Fluid umfasst, der mit dem Kompressionsmittel verbunden ist, und ferner einen zweiten Kanal und einen dritten Einlasskanal und einen vierten Auslasskanal umfasst, und in dem die Kompressionsmittel mit der ersten proximalen Öffnung (12) des Ventils (10) durch den zweiten Kanal verbunden sind, und auch die zweite distale Öffnung (14) des Ventils (10) mit dem Speichertank durch den dritten Einlasskanal verbunden ist, und auch der Speichertank mit dem vierten Auslasskanal für das druckbeaufschlagte gasförmige Fluid verbunden ist.

## Revendications

1. Un dispositif de gonflage (50) pour un pneumatique destiné à un véhicule ayant au moins deux roues et/ou pour un dispositif de manutention, dans lequel ledit dispositif de gonflage (50) comprend un clapet anti-retour (10) et comprend en outre des moyens de compression pour comprimer un fluide gazeux dans ledit pneumatique, ledit clapet anti-retour (10) comprenant une première ouverture proximale (12) et une seconde ouverture distale (14), et comprenant également un conduit (11) reliant ladite première ouverture proximale (12) avec ladite seconde ouverture distale (14) pour permettre le passage dudit fluide gazeux, et ladite vanne (10) comprend également un siège (17) formé à l'intérieur de ladite première ouverture proximale (12) et comprend également un élément de fermeture (15) qui peut être couplé avec ledit siège (17) pour empêcher la fuite dudit fluide gazeux par ladite première ouverture proximale (12), ledit dispositif de gonflage (50) **caractérisé en ce que** ledit clapet anti-retour (10) comprend au moins un deuxième conduit annulaire (13) qui entoure au moins partiellement ledit conduit (11) et qui est associé à ladite première ouverture proximale (12) et à ladite deuxième ouverture distale (14), pour permettre le passage dudit fluide gazeux depuis ladite première ouverture proximale (12) vers ladite deuxième ouverture distale (14), même lorsque ledit conduit (11) est fermé.

2. Dispositif de gonflage (50) selon la revendication 1, **caractérisé en ce que** ledit au moins un second conduit annulaire (13) du point de vue hydraulique est parallèle audit conduit (11).

3. Dispositif de gonflage (50) selon l'une quelconque des revendications 1 à 2, **caractérisé en ce qu'**il comprend un corps extérieur (40) comprenant ladite première ouverture proximale (12) formée à une première extrémité proximale (42) et également ledit corps extérieur (40) comprend une cavité (46), en particulier de type cylindrique, qui est équipée d'une paroi inférieure dans laquelle, à ladite première ouverture proximale (12), ledit siège (17) est de préférence fait dudit élément de fermeture (15).

4. Dispositif de gonflage (50) selon l'une quelconque des revendications 1 à 3, **caractérisé en ce qu'**il comprend une chambre (16) reliée à ladite première ouverture proximale (12) et à ladite seconde ouverture distale (14) et dans laquelle est mobile ledit élément de fermeture (15) de préférence du type à bille, et également ladite chambre (16) est reliée audit conduit (11) et est également associée audit au moins un second conduit annulaire (13).

5. Dispositif de gonflage (50) selon l'une quelconque des revendications 1 à 4, **caractérisé en ce que** ledit élément de fermeture (15) est apte à passer d'une position de travail dans laquelle il est pressé contre une extrémité dudit conduit (11), et en particulier aussi contre un second siège (37), pour fermer uniquement ledit conduit (11) et pour permettre le passage d'un écoulement dudit fluide gazeux venant de ladite première ouverture proximale (12) à ladite seconde ouverture distale (14) à travers ledit au moins un second conduit annulaire (13), à une position de repos dans laquelle ledit élément de fermeture (15) est pressé contre ledit siège (17) pour fermer ladite première ouverture proximale (12) de manière à empêcher le passage d'un écoulement dudit fluide gazeux provenant dudit conduit (11) et dudit au moins second conduit annulaire (13).

6. Dispositif de gonflage (50) selon l'une quelconque des revendications 1 à 5, **caractérisé en ce qu'**il comprend un second siège (37) formé à une extrémité dudit conduit (11) qui est notamment plus éloignée que ladite seconde ouverture distale (14), ledit élément de fermeture (15) pouvant être couplé audit second siège (37) pour fermer ledit conduit (11) quand une pression dudit fluide gazeux à ladite première ouverture proximale (12) est supérieure à une pression dudit fluide gazeux audit second orifice distal (14).

7. Dispositif de gonflage (50) selon l'une quelconque des revendications 4 à 6, **caractérisé en ce que** ladite chambre (16) a une longueur inférieure à une longueur de ladite cavité (46) dudit corps extérieur (40), et en particulier ladite chambre (16) a un diamètre ou un côté inférieur au diamètre ou à un côté de ladite cavité (46) dudit corps extérieur (40), permettant une réduction pertinente de la distance nécessaire au déplacement dudit élément de fermeture (15) de ladite position de travail vers ladite position de travail.

8. Dispositif de gonflage (50) selon l'une quelconque des revendications 1 à 7, **caractérisé en ce qu'**il comprend un corps intérieur (30) comprenant une première extrémité proximale (32) et une seconde extrémité distale (34), et également à l'intérieur dudit corps intérieur (30) ledit conduit (11) et ladite seconde ouverture distale (14) sont réalisés, et dans lequel ledit au moins un second conduit annulaire (13) est partiellement formé.

9. Dispositif de gonflage (50) selon la revendication 8, **caractérisé en ce que** ladite chambre (16) est formée à l'intérieur dudit corps interne (30) et est en particulier une rainure longitudinale de préférence symétrique axialement, qui est réalisée à partir d'une première extrémité proximale (32) dudit corps interne (30), et **en ce que** ladite chambre (16) communique avec ledit conduit (11).

10. Dispositif de gonflage (50) selon la revendication 9, **caractérisé en ce que** ladite chambre (16) comprend une paroi inférieure sur laquelle ledit second siège (37) est formé à proximité de ladite extrémité dudit conduit (11).

11. Dispositif de gonflage (50) selon l'une quelconque des revendications 8 à 10, **caractérisé en ce que** ledit au moins un deuxième conduit annulaire (13) est défini par une partie de ladite cavité (46) dudit corps extérieur (40) et par une partie latérale extérieure (33) dudit corps intérieur (30), qui a une dimension latérale inférieure à ladite partie de ladite cavité (46) dudit corps extérieur (40), conjointement avec celle-ci forme un espace annulaire entre ledit corps intérieur (30) et ledit corps extérieur (40), définissant ledit deuxième conduit annulaire (13).

12. Dispositif de gonflage (50) selon l'une quelconque des revendications 8 à 11, **caractérisé en ce que** ladite partie latérale extérieure (33) a une dimension latérale inférieure à ladite première extrémité proximale (32) et/ou à ladite seconde extrémité distale (34), et de plus de préférence ladite seconde extrémité distale dudit corps intérieur (30) comprend des moyens de fixation (35) formés sur une partie extérieure de celui-ci qui sont couplables avec des moyens de fixation correspondants formés dans ladite cavité (46) dudit corps extérieur (40) à une seconde extrémité distale (44) du même, pour réaliser ledit clapet de retenue (10).

13. Dispositif de gonflage (50) selon la revendication 1, **caractérisé en ce qu'**il est adapté pour un véhicule ayant au moins deux roues qui est de préférence choisi parmi une bicyclette, une remorque ayant au moins deux roues, un véhicule automobile ayant deux ou trois roues, un véhicule automobile ayant au moins quatre roues.

14. Dispositif de compression pour un fluide gazeux, tel qu'en particulier de l'air, qui comprend un réservoir de stockage pour un fluide gazeux sous pression et des moyens de compression pour comprimer ledit fluide gazeux dans ledit réservoir de stockage, le dispositif de compression comprenant un clapet anti-retour (10) qui comprend une première ouverture proximale (12) et une deuxième ouverture distale (14), et comprenant également un conduit (11) reliant ladite première ouverture proximale (12) avec ladite deuxième ouverture distale (14) pour permettre le passage dudit fluide gazeux, et ladite vanne (10) comprend également un siège (17) formé à l'intérieur de ladite première ouverture proximale (12) et comprend également un élément de fermeture (15) qui peut être couplé avec ledit siège (17) pour empêcher la fuite dudit fluide gazeux par ladite première ouverture proximale (12), ledit dispositif de compression (50) **caractérisé en ce que** le clapet anti-retour (10) comprend au moins un deuxième conduit annulaire (13) qui entoure au moins partiellement ledit conduit (11) et qui est associé à ladite première ouverture proximale (12) et à ladite deuxième ouverture distale (14), pour permettre le passage dudit fluide gazeux depuis ladite première ouverture proximale (12) vers ladite deuxième ouverture distale (14), même lorsque ledit conduit (11) est fermé.

15. Dispositif de compression selon la revendication 14, **caractérisé en ce qu'**il comprend un conduit d'aspiration pour ledit fluide gazeux, qui est relié audit moyen de compression, et comprend en outre un deuxième conduit et un troisième conduit d'entrée, et un quatrième conduit de sortie, et dans lequel lesdits moyens de compression sont reliés à ladite première ouverture proximale (12) de ladite soupape (10) par ledit deuxième conduit, et également ledit deuxième orifice distal (14) de ladite soupape (10) est relié audit réservoir de stockage par ledit troisième conduit d'entrée, et ledit réservoir de stockage est relié audit quatrième conduit de sortie pour ledit fluide gazeux sous pression.
